# EUROPEAN PATENT APPLICATION

(11) **EP 2 713 607 A1**
(43) Date of publication of application: **02.04.2014**
(21) Application number: 13738383.2
(22) Date of filing: 05.01.2013
(51) Int. Cl.: H04N 5/232

(54) **METHOD AND DEVICE FOR PHOTOGRAPHIC PROCESSING AND MOBILE APPARATUS**

(30) Priority: 16.01.2012 CN 201210013637
(71) Applicant: Huawei Device Co., Ltd., Shenzhen, Guangdong 518129 (CN)
(72) Inventor: BU, Qing, Shenzhen, Guangdong 518129 (CN)
(74) Representative: Epping - Hermann - Fischer
(86) International application number: PCT/CN2013/070043
(87) International publication number: WO 2013/107294

(57) **Abstract**

Embodiments of the present invention provide a method, an apparatus, and a mobile device for photographing processing. The method includes: obtaining a spatial position parameter of a mobile device collected by a gravity sensor in real time; separately computing, according to the spatial position parameter of the mobile device, stability degrees of the mobile device at multiple reference moments before a current reference moment and a stability degree of the mobile device at the current reference moment; and performing photographing processing according to the stability degrees of the mobile device at the multiple reference moments before the current reference moment and the stability degree of the mobile device at the current reference moment. The embodiments of the present invention can accurately obtain the optimal photographing condition, so as to avoid blurred photographing caused by vibration.

## Description

### TECHNICAL FIELD

The present invention relates to the field of communications technologies, and in particular, to a method, an apparatus, and a mobile device for photographing processing.

### BACKGROUND

With the continuous development and advancement of science and technology, functions of digital products are becoming more and more diverse. For example, handheld mobile devices such as smart phones and tablet computers as multifunctional products are not only mobile terminals for communication, work and transaction processing, but also good tools for entertainment and relaxation. Entertainment and relaxation functions of handheld mobile devices are increasingly valued by people. However, image quality of video making and photographing with handheld mobile terminals is always unsatisfactory, and especially when a photo taker is in a relatively unstable environment, the problem becomes particularly prominent. As is known to all, whether a photo taken with a camera is clear directly depends on whether the body of the camera remains stable when a photo is being taken. Therefore, how to prevent undesirable influences caused by vibration when a photo is being taken becomes a focus of attention from camera manufacturers, and certainly handheld mobile device manufacturers also pay equal attention to the anti-vibration technique.

In the prior art, an "anti-vibration (anti-vibration)" mode provided against vibration may be adopted for photographing. When a photo taker chooses this mode, a camera determines whether a photographing condition is optimal according to a current moving speed of the device, and when the device is in the optimal photographing condition, the device automatically takes a photo.

However, the prior art cannot accurately obtain the moving speed of the device, so the device takes a photo in a non-optimal photographing condition, and therefore, resolution of the photo is not good.

### SUMMARY

Embodiments of the present invention provide a method, an apparatus, and a mobile device for photographing processing, which can accurately obtain a photographing condition of a mobile device, so as to improve resolution of a taken photo.

According to the first aspect, an embodiment of the present invention provides a method for photographing processing, which includes:
obtaining a spatial position parameter of a mobile device collected by a gravity sensor in real time;
separately computing, according to the spatial position parameter of the mobile device, stability degrees of the mobile device at multiple reference moments before a current reference moment and a stability degree of the mobile device at the current reference moment; and
performing photographing processing according to the stability degrees of the mobile device at the multiple reference moments before the current reference moment and the stability degree of the mobile device at the current reference moment.

According to another aspect, an embodiment of the present invention provides an apparatus for photographing processing, which includes:
an obtaining module, configured to obtain a spatial position parameter of a mobile device collected by a gravity sensor in real time;
a computing module, configured to separately compute, according to the spatial position parameter of the mobile device, stability degrees of the mobile device at multiple reference moments before a current reference moment and a stability degree of the mobile device at the current reference moment; and
a photographing processing module, configured to perform photographing processing according to the stability degrees of the mobile device at the multiple reference moments before the current reference moment and the stability degree of the mobile device at the current reference moment.

According to still another aspect, an embodiment of the present invention provides a mobile device, which includes a gravity sensor and the apparatus for photographing processing described in the foregoing.

A technical effect of the embodiments of the present invention is: collecting the spatial position parameter of the mobile device in real time through the gravity sensor; separately computing, according to the spatial position parameter of the mobile device, the stability degrees of the mobile device at the multiple reference moments before the current reference moment and the stability degree of the mobile device at the current reference moment; and performing the photographing processing according to the stability degrees of the mobile device at the multiple reference moments before the current reference moment and the stability degree of the mobile device at the current reference moment. Because the gravity sensor on a bottom layer of the mobile terminal has high sensitivity, relatively high spatial position parameters can be obtained, so that the optimal photographing condition may be accurately obtained. In this way, blurred photographing caused by vibration may be prevented, and resolution of the taken photo is improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flow chart of Embodiment 1 of a method for photographing processing according to the present invention;
FIG. 2 is a flow chart of Embodiment 2 of a method for photographing processing according to the present invention;
FIG. 3 is a flow chart of Embodiment 3 of a method for photographing processing according to the present invention;
FIG. 4 is a flow chart of Embodiment 4 of a method for photographing processing according to the present invention;
FIG. 5 is a schematic structural diagram of Embodiment 1 of an apparatus for photographing processing according to the present invention; and
FIG. 6 is a schematic structural diagram of Embodiment 2 of an apparatus for photographing processing according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

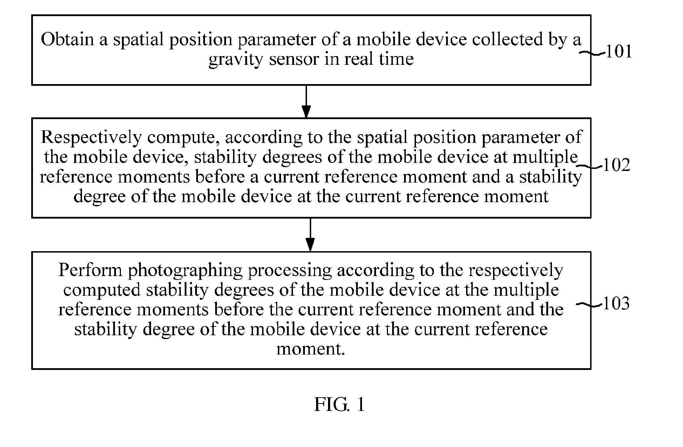

FIG. 1 is a flow chart of Embodiment 1 of a method for photographing processing according to the present invention. As shown in FIG. 1, this embodiment provides a method for photographing processing, which may specifically include the following steps:

Step 101: Obtain a spatial position parameter of a mobile device collected by a gravity sensor in real time.

After a photographing key of the mobile device is pressed, the mobile device does not instantly generate a screenshot of a currently taken image and then display the screenshot. Instead, the mobile device enters an image-forming stage, and at this time, a user interface (User Interface, UI for short) may still display the image currently taken by a camera of the mobile device. This embodiment is specifically an improvement of a method for photographing processing in the image-forming stage. This step is that the mobile device obtains the spatial position parameter of the mobile device collected by the gravity sensor in real time, and the step is specifically that a photographing system of the mobile device obtains the spatial position parameter. The gravity sensor is a functional module integrated in the mobile device, and is configured to collect the spatial position parameter of the mobile device in real time, where the spatial position parameter may specifically be a three-dimensional coordinate value or spatial coordinate value, namely, (x,y,z), of a certain position where the mobile device is located. In this embodiment, the gravity sensor may collect a spatial position parameter of the mobile device at each collecting moment in real time after the photographing key is pressed. The collecting moment is specifically determined according to a collecting frequency, and the collecting frequency may be specifically set according to a practical situation, for example, setting the collecting frequency as collecting every 1ms. After the photographing key of the mobile device is pressed, the gravity sensor may send the collected spatial position parameter to the mobile device in real time, or may send multiple groups of spatial position parameters at preset intervals, for example, sending 50 groups of spatial position parameters every 50ms.

Step 102: Separately compute, according to the spatial position parameter of the mobile device, stability degrees of the mobile device at multiple reference moments before a current reference moment and a stability degree of the mobile device at the current reference moment.

After obtaining the spatial position parameter of the mobile device, the mobile device may separately obtain, by performing computing, stability degrees of the mobile device at multiple different reference moments according to the spatial position parameter of the mobile device. In this embodiment, the stability degrees at the multiple different reference moments include the stability degrees at the multiple reference moments before the current reference moment and the stability degree at the current reference moment.

In this embodiment, after the photographing key of the mobile device is pressed, the gravity sensor constantly collects the spatial position parameters of the mobile device in real time, and therefore constantly computes a stability degree at every reference moment accordingly, so as to generate the stability degrees at the multiple reference moments. The current reference moment is the moment when the mobile device is currently working, or may also be the moment when a currently taken image is displayed for a user.

In this embodiment, the reference moments may be moments when the stability degrees are computed at intervals. In this embodiment, the reference moments may be preset, for example, computing a stability degree every 50ms, so the 50^{th} millisecond and the 100^{th} millisecond are the reference moments. Certainly, the reference moments may be set by using another method, for example, setting the reference moments through an arithmetic progression or a geometric progression, or choosing the reference moments according to actual requirements. In this embodiment, the choosing of the reference moments is not limited.

In this embodiment, a method for computing the stability degree of the mobile device at every reference moment before the current reference moment is the same as a method for computing the stability degree of the mobile device at the current reference moment. This may be construed as replacing a value at the current reference moment with a value at every reference moment before the current reference moment.

In this step, the stability degrees of the mobile device at the multiple reference moments may be separately computed according to the spatial position parameters of the mobile device at the different collecting moments. Because a frequency of computing the stability degrees is different from a frequency of collecting the parameters, the reference moments in this step are different from the collecting moments mentioned in the foregoing step. For example, an interval between two collecting moments may be set to 1ms, whereas an interval between two reference moments may be set to 50ms, so in this step, 50 groups of spatial position parameters collected within 50ms may be used to compute a stability degree at a reference moment. This step is separately computing, according to the multiple groups of spatial position parameters of the mobile device at the different collecting moments sent by the gravity sensor, the stability degrees of the mobile device at the multiple reference moments. For example, use 50 groups of spatial position parameters collected from the 1^{st} ms to the 50^{th} ms to compute a stability degree of the mobile device at the reference moment of the 50^{th} ms, and use 50 groups of spatial position parameters collected from the 51^{st} ms to the 100^{th} ms to compute a stability degree of the mobile device at the reference moment of the 100^{th} ms.

Step 103: Perform photographing processing according to the separately computed stability degrees of the mobile device at the multiple reference moments before the current reference moment and the stability degree of the mobile device at the current reference moment.

Through the foregoing step, the stability degree of the mobile device at the current reference moment may first be obtained according to the spatial position parameter, and the stability degrees of the mobile device at the multiple reference moments before the current reference moment are then compared with the stability degree of the mobile device at the current reference moment, so as to determine whether the mobile device is in a preset photographing condition at the current reference moment.

Specifically, every time after a stability degree at a reference moment is obtained by performing computing, the previously obtained stability degrees at different reference moments and the stability degree at the current reference moment are analyzed, so as to perform photographing processing, that is, determining whether to take a photo at present. In this step, according to the stability degrees of the mobile device, a current photographing condition may be determined, and specifically, whether the stability degrees of the mobile device tend to be stable may be determined. When the stability degrees of the mobile device tend to a stable value, it indicates that the current photographing condition is optimal, so the mobile device may automatically take a photo or prompt the user to perform photographing confirmation, that is, the user needs to press the photographing key again to take a photo. For the automatically photographing manner, the photographing key does not need to be pressed again to take a photo; however, for the latter manner, after prompting used for that the photo may be taken, the user needs to press the virtual photographing button to take a photo.

This embodiment of the present invention provides a method for photographing processing. With the method, the spatial position parameter of the mobile device in real time is collected through the gravity sensor, separately according to the spatial position parameter of the mobile device, the stability degrees of the mobile device at multiple reference moments before the current reference moment and the stability degree of the mobile device at the current reference moment are separately computed, and the photographing processing according to the stability degrees of the mobile device at the multiple reference moments before the current reference moment and the stability degree of the mobile device at the current reference moment is performed. Because the gravity sensor on a bottom layer of the mobile terminal has high sensitivity, relatively high spatial position parameters can be obtained, so that the optimal photographing condition may be accurately obtained. In this way, blurred photographing caused by vibration may be prevented, and resolution of the taken photo is improved.

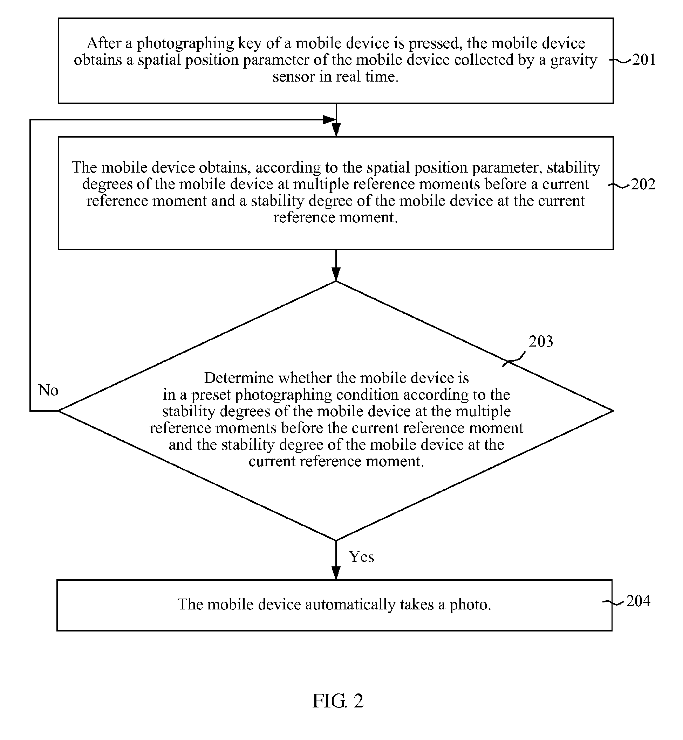

FIG. 2 is a flow chart of Embodiment 2 of a method for photographing processing according to the present invention. As shown in FIG. 2, this embodiment provides a method for photographing processing, which may specifically include the following steps:

Step 201: After a photographing key of a mobile device is pressed, the mobile device obtains a spatial position parameter of the mobile device collected by a gravity sensor in real time.

This step is specifically that, after the photographing key of the mobile device is pressed, the mobile device obtains the spatial position parameter of the mobile device collected by the gravity sensor in real time. The gravity sensor may specifically be the SensorEventListener-like software provided by an Android system, and is configured to collect the spatial position parameter of the mobile device in real time, where the spatial position parameter may specifically be a coordinate value, namely, (x,y,z), of a certain position where the mobile device is located. In this embodiment, after the photographing key of the mobile device is pressed, the gravity sensor may obtain a spatial position parameter, which is collected by the gravity sensor in real time, of the mobile device at each collecting moment. The collecting moment is specifically determined according to a collecting frequency, and the collecting frequency may be specifically set according to a practical situation, for example, setting the collecting frequency as collecting a spatial position parameter every 1ms. Specifically, the mobile device may obtain every group of spatial position parameters collected by the gravity sensor in real time, or may obtain multiple groups of spatial position parameters at preset intervals, for example, obtaining 50 groups of spatial position parameters every 50ms.

Step 202: The mobile device obtains, according to the spatial position parameter, stability degrees of the mobile device at multiple reference moments before a current reference moment and a stability degree of the mobile device at the current reference moment.

In this embodiment, after obtaining the spatial position parameter of the mobile device, the mobile device may obtain, according to the spatial position parameter, the stability degrees of the mobile device at the multiple reference moments before the current reference moment and the stability degree of the mobile device at the current reference moment. Because the stability degrees in this embodiment are computed in real time, the current reference moment is the moment when the stability degree is computed. For example, if a stability degree is computed every 50ms, and the solution in this embodiment is performed from the 0^{th} ms, a current reference moment when a stability degree is computed for the first time is the 50^{th} ms moment, a current reference moment when a stability degree is computed for the second time is the 100^{th} ms moment, and so on, and a current reference moment when a stability degree is computed for the n^{th} time is the 50*n^{th} ms moment. In this embodiment, it is supposed that the gravity sensor collects one group of spatial position parameters of the mobile device every 1ms and computes a stability degree every 50ms.

Specifically, in this embodiment, the mobile device may compute, according to multiple groups of spatial position parameters of the mobile device within a preset period before the current reference moment, an expected value of the spatial position parameter at the current reference moment, and use the expected value of the spatial position parameter at the current reference moment as the stability degree of the mobile device at the current reference moment. That is, this embodiment may use expected values of the spatial position parameter to indicate the stability degrees of the mobile device, and specifically may use the multiple groups of spatial position parameters collected by the gravity sensor to compute the expected values. When computing the stability degree of the mobile device at the current reference moment, specifically 50 groups of spatial position parameters obtained from the gravity sensor are used within 50ms before the current reference moment, that is, the 50 groups of spatial position parameters are used to compute an expected value of the spatial position parameter. Because the spatial position parameter may be three coordinates x, y, and z, expected values of the coordinates x, y, and z may be separately obtained herein through computing, and then n processing, such as an averaging processing, is performed on the expected values of the x, y, and z, so as to obtain a value of the stability degree of the mobile device at the current reference moment. A method of obtaining the expected values of coordinates x, y, and z may be: according to the collected 50 groups of values xi, yi, and zi of coordinates x, y, and z, obtaining a probability value pi of each value by performing computing; and using an expected formula Ex=s1*p1+s2*p2+...+s50*p50 to separately obtain the expected values of the coordinates x, y, and z through computing.

In this embodiment, after the photographing key of the mobile device is pressed, the gravity sensor constantly collects the spatial position parameters of the mobile device in real time, and therefore constantly computes a stability degree at every reference moment accordingly, so as to generate the stability degrees at the multiple reference moments. The current reference moment is a moment when the mobile device is currently working, or may also be the moment when a currently taken image is displayed for a user.

Step 203: Determine whether the mobile device is in a preset photographing condition at the current reference moment, according to the stability degrees of the mobile device at the multiple reference moments before the current reference moment and the stability degree of the mobile device at the current reference moment; if yes, execute step 204; if not, return to step 202.

After the stability degree of the mobile device at the current reference moment is obtained by performing computing, it is determined whether the mobile device is in a preset photographing condition at the current reference moment, according to the stability degrees of the mobile device at the multiple reference moments before the current reference moment and the stability degree of the mobile device at the current reference moment. If yes, execute step 204; if not, execute step 202 again, so as to compute a stability degree at a next reference moment after the current reference moment for determination, until a stability degree which meets the condition is obtained. The preset photographing condition in this embodiment may be a preset optimal photographing condition, and stability degrees of the mobile device are herein used as a standard for determining whether the mobile device is in the preset photographing condition, that is, a standard for determining whether a photographing condition of the mobile device is the optimal.

Specifically, the stability degree of the mobile device at the current reference moment may be compared with the stability degrees of the mobile device at the multiple reference moments before the current reference moment to determine whether the stability degrees of the mobile device at the current reference moment and at the multiple reference moments before the current reference moment tend to be stable. That is, according to the comparison between the stability degree of the mobile device at the current reference moment and the stability degrees at the several reference moments before the current reference moment, it is determined whether the stability degrees of the mobile device tend to be stable, for example, whether the stability degrees of the mobile device tend to a stable value, for example, the stable value is 1. If yes, it indicates that the mobile device is currently in the preset photographing condition, so step 204 is executed; if not, it is required to continue to compute a stability degree at a next reference moment after the current reference moment.

Step 204: The mobile device automatically takes a photo.

When the mobile device learns that the stability degrees of the mobile device at the recent several reference moments tend to be stable by comparing the stability degree at the current reference moment and the stability degrees at the previous several reference moments, it indicates that the mobile device is currently in the preset photographing condition, so the mobile device automatically take a photo to obtain the clearest photo.

This embodiment of the present invention provides a method for photographing processing. With the method the spatial position parameter of the mobile device in real time is collected through the gravity sensor, separately according to the spatial position parameter of the mobile device, the stability degrees of the mobile device at the multiple reference moments before the current reference moment and the stability degree of the mobile device at the current reference moment are separately computed, and the photographing processing according to the stability degrees of the mobile device at the multiple reference moments before the current reference moment and the stability degree of the mobile device at the current reference moment is performed. Because the gravity sensor on a bottom layer of the mobile terminal has high sensitivity, relatively high spatial position parameters can be obtained, so that the optimal photographing condition may be accurately obtained. In this way, blurred photographing caused by vibration may be prevented, and resolution of the taken photo is improved.

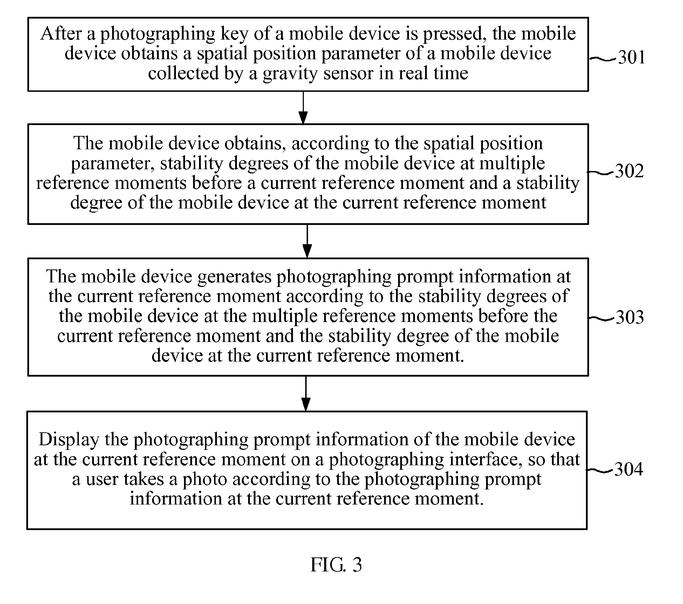

FIG. 3 is a flow chart of Embodiment 3 of a method for photographing processing according to the present invention. As shown in FIG. 3, this embodiment provides a method for photographing processing, which may specifically include the following steps:

Step 301: After a photographing key of a mobile device is pressed, the mobile device obtains a spatial position parameter of a mobile device collected by a gravity sensor in real time. This step is similar to step 201, and is therefore not repeated herein.

Step 302: The mobile device obtains, according to the spatial position parameter, stability degrees of the mobile device at multiple reference moments before a current reference moment and a stability degree of the mobile device at the current reference moment. This step is similar to step 202, and is therefore not repeated herein.

Step 303: The mobile device generates photographing prompt information at the current reference moment according to the stability degrees of the mobile device at the multiple reference moments before the current reference moment and the stability degree of the mobile device at the current reference moment.

In this step, after obtaining the stability degrees of the mobile device at the multiple reference moments before the current reference moment and the stability degree of the mobile device at the current reference moment through computing, the mobile device generates the photographing prompt information at the current reference moment according to values of these stability degrees. That is, the mobile device may analyze the values of the stability degrees at the recent several reference moments, and when the values of the stability degrees at the recent several reference moments tend to a stable value, the correspondingly generated photographing prompt information is "suited for photographing"; or the generated photographing prompt information is "unsuited for photographing", which is used to prompt a user to perform a further operation.

Step 304: Display the photographing prompt information of the mobile device at the current reference moment on a photographing interface, so that a user takes a photo according to the photographing prompt information at the current reference moment.

After the mobile device generates the photographing prompt information, the photographing prompt information of the mobile device may be displayed at the current reference moment on the photographing interface, so that the user may decide, according to the photographing prompt information at the current reference moment, whether to take a photo. When the photographing prompt information is "suited for photographing", the user may press a virtual photographing button to capture a clear picture displayed on the current photographing interface; when the photographing prompt information is "unsuited for photographing", the user may wait without taking a photo at the moment.

This embodiment of the present invention provides a method for photographing processing. With the method, the spatial position parameter of the mobile device in real time is collected through the gravity sensor, separately according to the spatial position parameter of the mobile device, the stability degrees of the mobile device at the multiple reference moments before the current reference moment and the stability degree of the mobile device at the current reference moment are separately computed, and the photographing processing according to the stability degrees of the mobile device at the multiple reference moments before the current reference moment and the stability degree of the mobile device at the current reference moment is performed. Because the gravity sensor on a bottom layer of the mobile terminal has high sensitivity, relatively high spatial position parameter can be obtained, so that the optimal photographing condition may be accurately obtained. In this way, blurred photographing caused by vibration may be prevented, and resolution of the taken photo is improved.

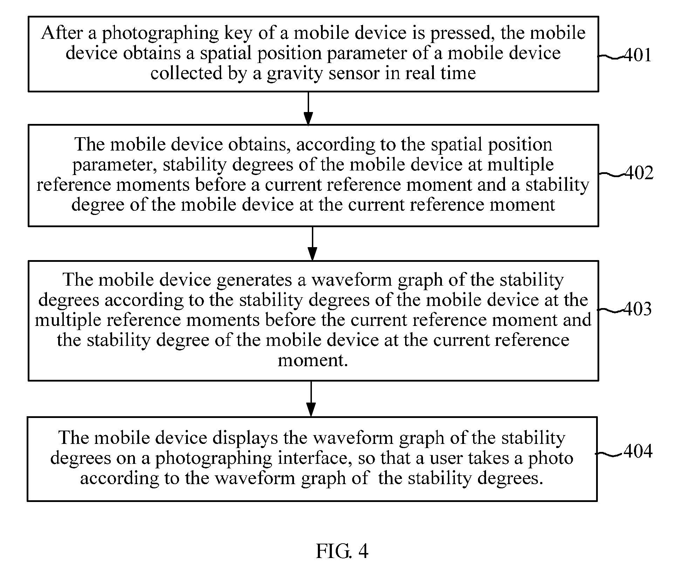

FIG. 4 is a flow chart of Embodiment 4 of a method for photographing processing according to the present invention. As shown in FIG. 4, this embodiment provides a method for photographing processing, which may specifically include the following steps:

Step 401: After a photographing key of a mobile device is pressed, the mobile device obtains a spatial position parameter of a mobile device collected by a gravity sensor in real time. This step is similar to step 201, and is therefore not repeated herein.

Step 402: The mobile device obtains, according to the spatial position parameter, stability degrees of the mobile device at multiple reference moments before a current reference moment and a stability degree of the mobile device at the current reference moment. This step is similar to step 202, and is therefore not repeated herein.

Step 403: The mobile device generates a waveform graph of stability degrees according to the stability degrees of the mobile device at the multiple reference moments before the current reference moment and the stability degree of the mobile device at the current reference moment.

In this step, after obtaining the stability degrees of the mobile device at the multiple reference moments before the current reference moment and the stability degree of the mobile device at the current reference moment through computing, the mobile device generates, according to values of these stability degrees, a waveform graph of the stability degrees, which is specifically a time-waveform graph, so as to reflect changes of the values of the stability degrees at the different reference moments in a form of wave forms.

Step 404: The mobile device displays the waveform graph of stability degrees on a photographing interface, so that a user takes a photo according to the waveform graph of stability degrees.

After the mobile device generates the waveform graph of the stability degrees, the waveform graph is displayed on the photographing interface. The waveform graph may specifically be displayed on the upper part of the photographing interface rather than the center of the interface, so that the user may decide whether to take a photo according to the waveform graph. When the waveform graph of the stability degrees tends to be level, it indicates that the changes in the stability degrees at the recent reference moments are relatively small, so the user may further press a virtual photographing button to capture a clear picture displayed on the current photographing interface; when the change in the waveform graph of the stability degrees is relatively large, the user may further wait without taking a photo at the moment.

This embodiment of the present invention provides a method for photographing processing. With the method, the spatial position parameter of the mobile device in real time is collected through the gravity sensor, separately according to the spatial position parameter of the mobile device, the stability degrees of the mobile device at the multiple reference moments before the current reference moment and the stability degree of the mobile device at the current reference moment are separately computed, and the photographing processing according to the stability degrees of the mobile device at the multiple reference moments before the current reference moment and the stability degree of the mobile device at the current reference moment is performed. Because the gravity sensor on a bottom layer of the mobile terminal has high sensitivity, relatively high spatial position parameter can be obtained, so that the optimal photographing condition may be accurately obtained. In this way, blurred photographing caused by vibration may be prevented, and resolution of the taken photo is improved.

A person of ordinary skill in the art may understand that, all or a part of steps according to the foregoing method embodiments may be implemented by a program instructing related hardware. The foregoing program may be stored in a computer readable storage medium. When the program runs, the steps of the foregoing embodiments of the method are performed. The foregoing storage medium may include any mediums capable of storing program codes, such as a ROM, a RAM, a magnetic disk, or an optical disc.

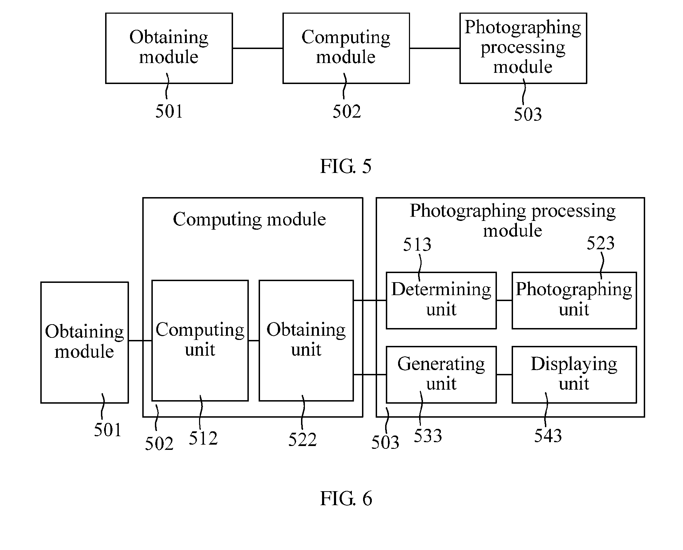

FIG. 5 is a schematic structural diagram of Embodiment 1 of an apparatus for photographing processing according to the present invention. As shown in FIG. 5, this embodiment provides an apparatus for photographing processing. The apparatus may specifically perform the steps in the method embodiment 1, which are not repeated herein. The apparatus for photographing processing provided by this embodiment may specifically include an obtaining module 501, a computing module 502, and a photographing processing module 503. The obtaining module 501 is configured to obtain a spatial position parameter of a mobile device collected by a gravity sensor in real time. The computing module 502 is configured to separately compute, according to the spatial position parameter of the mobile device, stability degrees of the mobile device at multiple reference moments before a current reference moment and a stability degree of the mobile device at the current reference moment. In this embodiment, specifically, the computing module 502 separately computes stability degrees of the mobile device at the multiple reference moments before the current reference moment and a stability degree of the mobile device at the current reference moment. The photographing processing module 503 is configured to perform photographing processing according to the stability degrees of the mobile device at the multiple reference moments before the current reference moment and the stability degree of the mobile device at the current reference moment.

FIG. 6 is a schematic structural diagram of Embodiment 2 of the apparatus for photographing processing according to the present invention. As shown in FIG. 6, this embodiment provides an apparatus for photographing processing. The apparatus may specifically perform the steps in Embodiment 2, Embodiment 3, or Embodiment 4 of the method, which are not repeated herein. In the apparatus for photographing processing provided by this embodiment, on the basis of FIG. 5, the computing module 502 may specifically include a computing unit 512 and an obtaining unit 522. The computing unit 512 is configured to compute, according to multiple groups of spatial position parameters of the mobile device within a preset period before the current reference moment, an expected value of the spatial position parameter at the current reference moment, and use the expected value of the spatial position parameter at the current reference moment as the stability degree of the mobile device at the current reference moment. The obtaining unit 522 is configured to repeat the computing step of the computing unit to separately obtain the stability degrees of the mobile device at the multiple reference moments before the current reference moment.

Specifically, the photographing processing module 503 in this embodiment may specifically include a determining unit 513 and a photographing unit 523. The determining unit 513 is configured to determine whether the mobile device is in a preset photographing condition at the current reference moment according to the stability degrees of the mobile device at the multiple reference moments before the current reference moment and the stability degree of the mobile device at the current reference moment. The photographing unit 523 is configured to automatically take a photo if the mobile device is in the preset photographing condition at the current reference moment. The determining unit 513 is further configured to: if the mobile device is not in the preset photographing condition at the current reference moment, determine whether the mobile device is in the preset photographing condition at a next reference moment after the current reference moment.

Specifically, the determining unit 513 is specifically configured to compare the stability degree of the mobile device at the current reference moment with the stability degrees of the mobile device at the multiple reference moments before the current reference moment, and determine whether the stability degrees of the mobile device at the current reference moment and at the multiple reference moments before the current reference moment tend to be stable.

Specifically, the photographing processing module 503 in this embodiment may further include a generating unit 533 and a displaying unit 543. The photographing processing module 533 is configured to separately generate photographing prompt information according to the stability degrees of the mobile device at the multiple reference moments before the current reference moment and the stability degree of the mobile device at the current reference moment. In this embodiment, the generating unit 533 may generate photographing prompt information at the current reference moment according to the stability degrees of the mobile device at the multiple reference moments before the current reference moment and the stability degree of the mobile device at the current reference moment. The displaying unit 543 is configured to display the photographing prompt information of the mobile device at the current reference moment on a photographing interface, so that a user takes a photo according to the photographing prompt information.

Further, the displaying unit 543 in this embodiment may be specifically configured to display, on the photographing interface, values of the stability degrees at the multiple reference moments before the current reference moment and the stability degree at the current reference moment, so that the user takes a photo according to the values of the stability degrees of the mobile device at the multiple reference moments before the current reference moment and the stability degree of the mobile device at the current reference moment; or configured to display a waveform graph of stability degrees of the mobile device at the multiple reference moments before the current reference moment and the stability degree of the mobile device at the current reference moment on the photographing interface, so that the user takes a photo according to the waveform graph.

This embodiment of the present invention provides an apparatus for photographing processing. With the method, the spatial position parameter of the mobile device in real time is collected through the gravity sensor, separately according to the spatial position parameter of the mobile device, the stability degrees of the mobile device at the multiple reference moments before the current reference moment and the stability degree of the mobile device at the current reference moment are separately computed, and the photographing processing according to the stability degrees of the mobile device at the multiple reference moments before the current reference moment and the stability degree of the mobile device at the current reference moment is performed. Because the gravity sensor on a bottom layer of the mobile terminal has high sensitivity, relatively high spatial position parameter can be obtained, so that the optimal photographing condition may be accurately obtained. In this way, blurred photographing caused by vibration may be prevented, and resolution of the taken photo is improved.

This embodiment provides a mobile device, which may specifically include a gravity sensor and the apparatus for photographing processing shown in FIG. 5 or FIG. 6.

A person of ordinary skill in the art may understand that all or a part of processes of the methods in the embodiments may be implemented by a computer program instructing relevant hardware. The program may be stored in a computer readable storage medium. When the program runs, the processes of the methods in the embodiments are performed. The storage medium may be a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for photographing processing, comprising:
obtaining a spatial position parameter of a mobile device collected by a gravity sensor in real time;
separately computing, according to the spatial position parameter of the mobile device, stability degrees of the mobile device at multiple reference moments before a current reference moment and a stability degree of the mobile device at the current reference moment; and
performing photographing processing according to the stability degrees of the mobile device at the multiple reference moments before the current reference moment and the stability degree of the mobile device at the current reference moment.

2. The method according to claim 1, wherein the separately computing, according to the spatial position parameter of the mobile device, stability degrees of the mobile device at multiple reference moments before a current reference moment and a stability degree of the mobile device at the current reference moment comprises:
computing, according to multiple groups of spatial position parameters of the mobile device within a preset period before the current reference moment, an expected value of the spatial position parameter at the current reference moment, and using the expected value of the spatial position parameter at the current reference moment as the stability degree of the mobile device at the current reference moment; and
repeating the computing step to separately obtain the stability degrees of the mobile device at the multiple reference moments before the current reference moment.

3. The method according to claim 1 or 2, wherein the performing photographing processing according to the stability degrees of the mobile device at the multiple reference moments before the current reference moment and the stability degree of the mobile device at the current reference moment comprises:
determining whether the mobile device is in a preset photographing condition at the current reference moment according to the stability degrees of the mobile device at the multiple reference moments before the current reference moment and the stability degree of the mobile device at the current reference moment;
automatically taking a photo if the mobile device is in the preset photographing condition at the current reference moment; and
determining whether the mobile device is in the preset photographing condition at a next reference moment after the current reference moment if the mobile device is not in the preset photographing condition at the current reference moment.

4. The method according to claim 3, wherein the determining whether the mobile device is in a preset photographing condition at the current reference moment according to the stability degrees of the mobile device at the multiple reference moments before the current reference moment and the stability degree of the mobile device at the current reference moment is specifically:
comparing the stability degree of the mobile device at the current reference moment with the stability degrees of the mobile device at the multiple reference moments before the current reference moment, and determining whether the stability degrees of the mobile device at the current reference moment and at the multiple reference moments before the current reference moment tend to be stable.

5. The method according to claim 1 or 2, wherein the performing photographing processing according to the stability degrees of the mobile device at the multiple reference moments before the current reference moment and the stability degree of the mobile device at the current reference moment further comprises:
generating photographing prompt information at the current reference moment according to the stability degrees of the mobile device at the multiple reference moments before the current reference moment and the stability degree of the mobile device at the current reference moment; and
displaying the photographing prompt information of the mobile device at the current reference moment on a photographing interface, so that a user takes a photo according to the photographing prompt information.

6. The method according to claim 5, wherein the displaying the photographing prompt information of the mobile device at the current reference moment on a photographing interface, so that a user takes a photo according to the photographing prompt information further comprises:
displaying values of the stability degrees of the mobile device at the multiple reference moments before the current reference moment and the stability degree of the mobile device at the current reference moment on the photographing interface, so that the user takes a photo according to the values of the stability degrees of the mobile device at the multiple reference moments before the current reference moment and the stability degree of the mobile device at the current reference moment; or
displaying a waveform graph of the stability degrees of the mobile device at the multiple reference moments before the current reference moment and the stability degree of the mobile device at the current reference moment on the photographing interface, so that the user takes a photo according to the waveform graph.

7. An apparatus for photographing processing, comprising:
an obtaining module, configured to obtain a spatial position parameter of a mobile device collected by a gravity sensor in real time;
a computing module, configured to separately compute, according to the spatial position parameter of the mobile device, stability degrees of the mobile device at multiple reference moments before a current reference moment and a stability degree of the mobile device at the current reference moment; and
a photographing processing module, configured to perform photographing processing according to the stability degrees of the mobile device at the multiple reference moments before the current reference moment and the stability degree of the mobile device at the current reference moment.

8. The apparatus according to claim 7, wherein the computing module comprises:
a computing unit, configured to compute, according to multiple groups of spatial position parameters of the mobile device within a preset period before the current reference moment, an expected value of the spatial position parameter at the current reference moment, and use the expected value of the spatial position parameter at the current reference moment as the stability degree of the mobile device at the current reference moment; and
an obtaining unit, configured to repeat the computing step of the computing unit to separately obtain the stability degrees of the mobile device at the multiple reference moments before the current reference moment.

9. The apparatus according to claim 7 or 8, wherein the photographing processing module comprises:
a determining unit, configured to determine whether the mobile device is in a preset photographing condition at the current reference moment according to the stability degrees of the mobile device at the multiple reference moments before the current reference moment and the stability degree of the mobile device at the current reference moment; and
a photographing unit, configured to automatically take a photo if the mobile device is in the preset photographing condition at the current reference moment, wherein
the determining unit is further configured to: if the mobile device is not in the preset photographing condition at the current reference moment, determine whether the mobile device is in the preset photographing condition at a next reference moment after the current reference moment.

10. The apparatus according to claim 9, wherein the determining unit is specifically configured to compare the stability degree of the mobile device at the current reference moment with the stability degrees of the mobile device at the multiple reference moments before the current reference moment, and determine whether the stability degrees of the mobile device at the current reference moment and at the multiple reference moments before the current reference moment tend to be stable.

11. The apparatus according to claim 7 or 8, wherein the photographing processing module further comprises:
a generating unit, configured to generate photographing prompt information at the current reference moment according to the stability degrees of the mobile device at the multiple reference moments before the current reference moment and the stability degree of the mobile device at the current reference moment; and
a displaying unit, configured to display the photographing prompt information of the mobile device at the current reference moment on a photographing interface, so that a user takes a photo according to the photographing prompt information.

12. The apparatus according to claim 11, wherein the displaying unit is further configured to display values of the stability degrees at the multiple reference moments before the current reference moment and the stability degree at the current reference moment on the photographing interface, so that the user takes a photo according to the values of the stability degrees of the mobile device at the multiple reference moments before the current reference moment and the stability degree of the mobile device at the current reference moment; or configured to display a waveform graph of the stability degrees of the mobile device at the multiple reference moments before the current reference moment and the stability degree of the mobile device at the current reference moment on the photographing interface, so that the user takes a photo according to the waveform graph.

13. A mobile device, comprising a gravity sensor and the apparatus for photographing processing according to any one of claims 7 to 12.
